# FASCICULE DE BREVET EUROPEEN

(11) **EP 0 419 358 B1**
(45) Date de publication et mention de la délivrance du brevet: **29.03.1995**
(21) Numéro de dépôt: 90402593.9
(22) Date de dépôt: 20.09.1990
(51) Int. Cl.: C01B 33/04

(54) **Procédé de préparation de disilane**
Verfahren zur Herstellung von Disilan
Process for the preparation of disilane

(30) Priorité: 22.09.1989 FR 8912478
(43) Date de publication de la demande: 27.03.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Parent, Jean-Claude, F-92380 Garches (FR); Renaudin, Marie-Hélène, F-75015 Paris (FR)
(74) Mandataire: Le Moenner, Gabriel

(56) Documents cités:
- EP-A- 0 314 542
- US-A- 3 982 912
- US-A- 4 554 141
- PATENT ABSTRACTS OF JAPAN vol. 12, no. 230 (C-508)(3077), 29 June 1988; & JP-A-6325210 (MITSUI TOATSU CHEM. INC.) 02.02.1988
- PATENT ABSTRACTS OF JAPAN vol. 12, no. 410 (C-540)(3257), 28 octobre 1988; & JP-A-63147815 (MITSUI TOATSU CHEM. INC.) 20.06.1988
- PATENT ABSTRACTS OF JAPAN vol 10, no. 214 (C-362) (2270), 25 juillet 1986; & JP-A-6153106 (SHOWA DENKO K.K.) 17.03.1986
- CHEMICAL ABSTRACTS vol. 66, no. 8, 20 février 1967, page 3102, abrége no. 32346w, Columbus, Ohio, US; M.V. SUSIC et al.: "Ion-exchange equilibriums in molecular sieve 4A" & Trans . Faraday Soc. 1966, vol. 62, no. 12, pages 3479-3483

## Description

La présente invention concerne la préparation du disilane.

Généralement, on procède à une réaction de l'alliage SiCaAl avec une solution d'acide chlorhydrique dilué qui produit un mélange de monosilane, disilane et trisilane, avec des impuretés telles que phosphine, hydrogène sulfuré, arsine, disiloxane et siloxanes supérieurs, après quoi on extrait par distillation le disilane du mélange.

Toutefois, le procédé de distillation ne permet pas de séparer le disiloxane du disilane car les courbes de tension de vapeur de ces deux composés sont pratiquement confondues. D'autre part, le disilane distillé comporte encore des traces de phosphine, hydrogène sulfuré, arsine, à des teneurs de l'ordre de 10 ppm. Il est donc nécessaire de mettre en oeuvre un procédé d'épuration complémentaire de façon à obtenir du disilane de pureté satisfaisante pour des applications électroniques.

Dans ce but, on a déjà pensé à mettre en oeuvre une séparation finale par adsorption sur tamis moléculaires, mais les premières études que la Déposante a déjà effectuées ont montré que la séparation sur tamis moléculaires pouvait conduire à une décomposition du disilane au contact du tamis, qui peut entraîner une perte de l'ordre de 20 % sans pour autant parvenir à l'élimination quasi complète des impuretés, de sorte que la qualité finale du produit ne répond pas aux normes que l'industrie électronique exige.

Il est aussi connu par le brevet US 3.982.912 de séparer la phosphine d'un mélange de phosphine et de monosilane au moyen d'une zéolithe de type A modifiée.

On sait aussi que l'on peut séparar la phoshine d'un mélange de phosphine et de disilane au moyen de zéolithe du type 3 A et 4 A, comme celà a été décrit dans les Patents Abstracts of Japan, vol. 12, n° 230 [JP-A-63 25210] et n° 410 [JP-A-63 147 815].

La présente invention a pour objet d'éliminer quasi totalement les impuretés dans la préparation finale du disilane tout en minimisant les pertes dues à la décomposition du disilane et cet objectif de l'invention est atteint en ce qu'on procède à une épuration finale du disilane par adsorption sélective sur tamis moléculaires, dont l'un est un tamis du type 3 A pour l'élimination des siloxanes et de l'hydrogène sulfuré et l'autre un tamis du type 4 A pour l'élimination de la phosphine et de l'arsine et, plus particulièrement, le tamis moléculaire 4 A pour l'élimination de la phosphine et de l'arsine a été modifié par substitution des ions sodium par des ions cadmium. Il est hautement préférable, voire indispensable, que l'on élimine d'abord les siloxanes et l'hydrogène sulfuré sur tamis moléculaire du type 3 A, puis la phosphine et l'arsine sur tamis moléculaire du type 4 A.

On ne reviendra pas sur la définition des tamis moléculaires 3 A et 4 A, en se contentant de renvoyer aux articles spécialisés en la matière, par exemple à l'article intitulé "Zeolites as selective adsorbents" par Douglas M. Ruthven, Univ. of New Bunwick Frédericton, N.B. Canada, paru dans "Chemical Engineering Progress" February 1988, pages 42 à 50, où l'on note seulement que le tamis moléculaire 4A présente généralement des ions sodium (Na⁺). En pratique, c'est le tamis 4A à ions sodium (Na⁺) que l'on trouve dans le commerce et l'un des mérites essentiels de la présente invention est non seulement d'avoir sélectionné les tamis 3A et 4A pour l'élimination sélective respectivement des siloxanes et de l'hydrogène sulfuré, d'une part, de la phosphine et de l'arsine d'autre part, mais également d'avoir conduit une sélection particulièrement poussée des structure et nature du tamis 4A en réalisant une substitution au moins partielle des ions sodium par des ions cadmium qui permet en pratique d'atteindre les résultats de qualité satisfaisante pour l'industrie électronique.

On détaille ci-après un exemple de mise en oeuvre de l'invention qui concerne l'épuration de 1 kg de disilane impur dont la composition est la suivante (analyse chromatographique au catharomètre) :

| | |
|---|---|
| Phosphine | 12 ppm |
| Hydrogène sulfure | 45 ppm |
| Arsine | 2 ppm |
| Disiloxane | 5810 ppm |
| Trisiloxane | 3,5 ppm |
| Disilane | Q.S. |

L'épuration est réalisée sur des colonnes présentant une section de 7,3 cm².

La hauteur du lit de tamis 3A (granulométrie 1,6 à 2,5 mm) est égale à 110 cm.

La hauteur du lit de tamis 4A échangé au cadmium (granulométrie 1 à 1,6 mm) est égale à 43 cm.

La charge de tamis 3A est de 620 g ; celle de tamis 4A au cadmium est de 260 g.

Ces tamis sont préalablement activés par chauffage à 370° C sous un balayage d'azote de 150 l/h pendant 3 heures puis d'hélium de 150 l/h pendant 1 heure. L'hélium est ensuite éliminé par pompage. L'épuration est faite à la température de 16°C sous une pression de 1,3 bars absolus. Le débit moyen est de 76 l/h (= 200 g/h).

L'analyse du produit récupéré a donné les résultats suivants (compositon moyenne, en considérant les analyses effectuées sur la phase gazeuse et la phase liquide de la bouteille réceptrice) :

| | |
|---|---|
| Monosilane | 1,7 % |
| Trisilane | 470 ppm |
| Disiloxane | < 1 ppm |
| Trisiloxane | < 1 ppm |
| Phosphine | < 10 ppb |
| Hydrogène sulfuré | < 20 ppb |
| Arsine | < 5 ppb |
| Disilane | Q.S. |

L'analyse des impuretés phosphine, hydrogène sulfuré et arsine est réalisée par chromatographie à l'aide d'un détecteur à photo-ionisation (P.I.D.)

La perte en disilane, par adsorption sur les tamis moléculaires s'élève à 30g, soit 3 % de la quantité initiale.

D'autre part, les phénomènes de décomposition partielle du disilane surles tamis provoquent la formation de 1,7 % de monosilane soit 8,5 g.

La perte totale en disilane est de l'ordre de 4 %.

## Revendications

1. Procédé de séparation de disilane, d'un gaz brut incorporant du monosilane, du disilane, du trisilane et des impuretés telles que phosphine, hydrogène sulfuré, arsine, disiloxane et siloxanes supérieurs, selon lequel le gaz brut est soumis à une étape de séparation par distillation pour l'élimination substantielle des autres composés du silicium, à l'exception du disiloxane, et l'élimination substantielle des impuretés phosphine, hydrogène sulfuré et arsine, caractérisé en ce qu'on procède à une épuration finale du disilane par adsorption sélective sur tamis moléculaires, dont l'un est un tamis du type 3 A pour l'élimination des siloxanes et de l'hydrogène sulfuré et l'autre un tamis du type 4 A pour l'élimination de la phosphine et de l'arsine.

2. Procédé selon la revendication 1, caractérisé en ce que le tamis moléculaire 4 A pour l'élimination de la phosphine et de l'arsine a été modifié par substitution des ions sodium par des ions cadmium.

3. Procédé selon la revendication 1 ou 2, caractérisé en ce qu'on élimine d'abord les siloxanes et l'hydrogène sulfuré sur tamis moléculaire du type 3 A, puis la phosphine et l'arsine sur tamis moléculaire du type 4 A.

## Claims

1. Process for separating disilane from a crude gas incorporating monosilane, disilane, trisilane and impurities such as phosphine, hydrogen sulphide, arsine, disiloxane and higher siloxanes, according to which the crude gas is subjected to a separation stage by distillation for the substantial elimination of other silicon compounds, with the exception of disiloxane, and the substantial elimination of phosphine, hydrogen sulphide and arsine impurities, characterized in that a final purification of the disilane is carried out by selective adsorption on molecular sieves, one of which is a type 3A sieve for the elimination of siloxanes and hydrogen sulphide and the other a type 4A sieve for the elimination of phosphine and arsine.

2. Process according to claim 1, characterized in that the molecular sieve 4A for the elimination of phosphine and arsine has been modified by substituting sodium ions by cadmium ions.

3. Process according to claim 1 or 2, characterized in that siloxanes and hydrogen sulphide are first of all eliminated on a type 3A molecular sieve, followed by phosphine and arsine on a type 4A molecular sieve.

## Patentansprüche

1. Verfahren zur Trennung von Disilan von einem Rohgas, das Monosilan, Disilan und Trisilan und Verunreinigungen, wie z.B. Phosphin, Schwefelwasserstoff, Arsin, Disiloxan und höhere Siloxane, enthält bei dem das Rohgas einem Schritt zur Trennung durch Destillation zur überwiegenden Entfernung der anderen Verbindungen des Siliziums mit Ausnahme des Disiloxans und zur überwiegenden Entfernung der Verunreinigungen Phosphin, Schwefelwasserstoff und Arsin ausgesetzt wird, dadurch gekennzeichnet, daß man eine Endreinigung des Disilans durch selektive Adsorption an Molekularsieben durchführt, von denen eines ein 3A-Sieb zur Entfernung der Siloxane und des Schwefelwasserstoffs und das andere ein 4A-Sieb zur Entfernung des Phosphins und des Arsins ist.

2. Verfahren nach Anspruch 1, dadurch gekennzeichnet, daß das 4A-Molekularsieb zur Entfernung des Phosphins und des Arsins durch Substitution der Natriumionen durch Kadmiumionen modifiziert worden ist.

3. Verfahren nach Anspruch 1 oder 2, dadurch gekennzeichnet, daß man zuerst die Siloxane und den Schwefelwasserstoffan einem 3A-Molekularsieb und daraufhin das Phosphin und das Arsin an dem 4A-Molekularsieb entfernt.
